Europäisches Patentamt

**European Patent Office**

**Office européen des brevets**

(19)

(11) Publication number: **0 043 386**
**A1**

(12) # EUROPEAN PATENT APPLICATION

(21) Application number: **80200648.6**

(22) Date of filing: **03.07.80**

(51) Int. Cl.³: **B 60 P 1/60**

(43) Date of publication of application: **13.01.82**
**Bulletin 82/2**

(84) Designated Contracting States: **AT BE CH DE FR GB IT LI LU NL SE**

(71) Applicant: **Welgro B.V., Parallelweg 18, NL-7141 DC Groenlo (NL)**

(72) Inventor: **Wellink, Theodorus Anthonius, 1, Hobbemastraat, NL-7141 XD Groenlo (NL)**

(74) Representative: **Konings, Lucien Marie Cornelis Joseph et al, OCTROOIBUREAU ARNOLD & SIEDSMA Sweelinckplein 1, NL-2517 GK Den Haag (NL)**

(54) Vehicle for conveying in bulk powdered, granular or fragmented material.

(57) A vehicle (9) with many hoppers (11) for bulk material has a common discharge pipe (1) and a special closing member (19) in the discharge funnel (8), which is such that in closed position the discharge pipe (1) offers little flow resistance to the passing mixture of air and material.

EP 0 043 386 A1

0043386

— 1 —

Vehicle for conveying in bulk powdered, granular or fragmented material.

The invention relates to a vehicle comprising a plurality of hoppers for conveying in bulk powdered, granular or fragmented material, said hoppers each having a filling opening that can be closed in an airtight manner and a discharge funnel, each discharge funnel communicating with a common discharge pipe through at least one discharge funnel opening that can be closed by a closing member adjustable in the direction of height, the discharge pipe having a compressed-air nozzle and an outlet for air with material, the hoppers communicating beyond the discharge funnel opening near their top ends with said nozzle and with one another, whilst the closing member has a circumference without corners and co-operates in sealing relationship by means of an elastic sealing ring with a correspondingly shaped circumference of the discharge funnel.

- 2 -                                        0043386

Such a vehicle is known from Dutch patent specification 139,696. The discharge of material from the known vehicle sometimes involves difficulties, particularly when the number of hoppers is large.

The invention has for its object to provide a vehicle of the kind set forth, in which the discharge is performed more rapidly. For this purpose, in accordance with the invention, beneath a cornerless sealing ring co-operating in sealing relationship with the discharge funnel, the closing member comprises a filling piece which supplements, in the closed state of the closing member, the wall of the common discharge pipe to form an uninterrupted pipe of substantially uniform passage.

It should be noted that Dutch patent specification 131,527 discloses a vehicle in which the closing member supplements the discharge pipe as an upper wall of said pipe. In this case the upper wall does not shut the discharge pipe in an airtight manner. In this known vehicle the discharging operation starts with difficulty, because the hoppers are not filled with compressed air.

In order to obtain a more rapid start of the discharging process each hopper of the vehicle according to the invention is subjected to pressure for discharging the same and soon thereafter the closing member is lifted from the hopper to be discharged, so that substantially the same pressure prevails above and below the material to be discharged. When one or more hoppers have been discharged, the compressed air is prevented from partly flowing towards the outlet owing to the hermetic closure of the discharge funnel openings concerned, so that lack of compressed air required for capturing the material to be discharged beneath the funnel in the discharge pipe is avoided. Between the round funnel and the round sealing ring a hermetic closure can easily be established, whilst with the aid of the filling piece at each discharge funnel opening it is ensured, that the mixture of air and bulk material therein can pass through said discharge funnel opening without much resistance in a continual, common discharge pipe.

Since the filling piece has a smaller size than the sealing ring, no material will be retained on the filling piece. When the closing member is fastened to the lower end of a vertically reciprocatory sliding tube telescopically co-operating with a screening hood rigidly secured to the funnel and arranged in the hopper, the material will encounter low flow resistance when flowing out of the hopper. There are no corners or rims of the closing member and no control means on which residual material can be retained.

The discharge funnels and the closing members of the vehicle according to the invention can be readily manufactured at low cost.

The invention will be described more fully hereinafter with reference to a drawing. The drawing shows in:

fig. 1 a longitudinal, sectional view of a vehicle,

figs. 2 and 3 an enlarged longitudinal sectional view of a discharge funnel of the vehicle of fig. 1 in the open and closed state respectively and

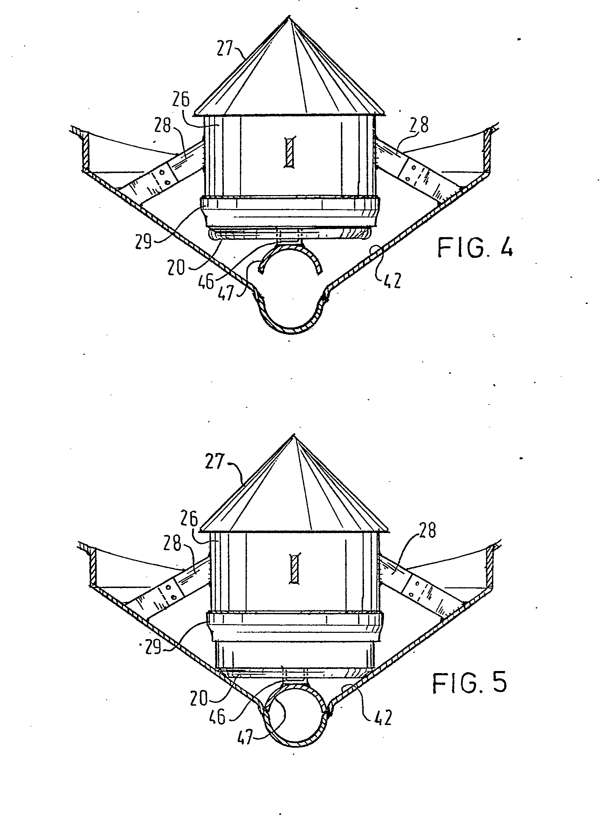

figs. 4 and 5 a sectional view taken on the line IV-IV and V-V respectively of the details of figs. 2 and 3 respectively.

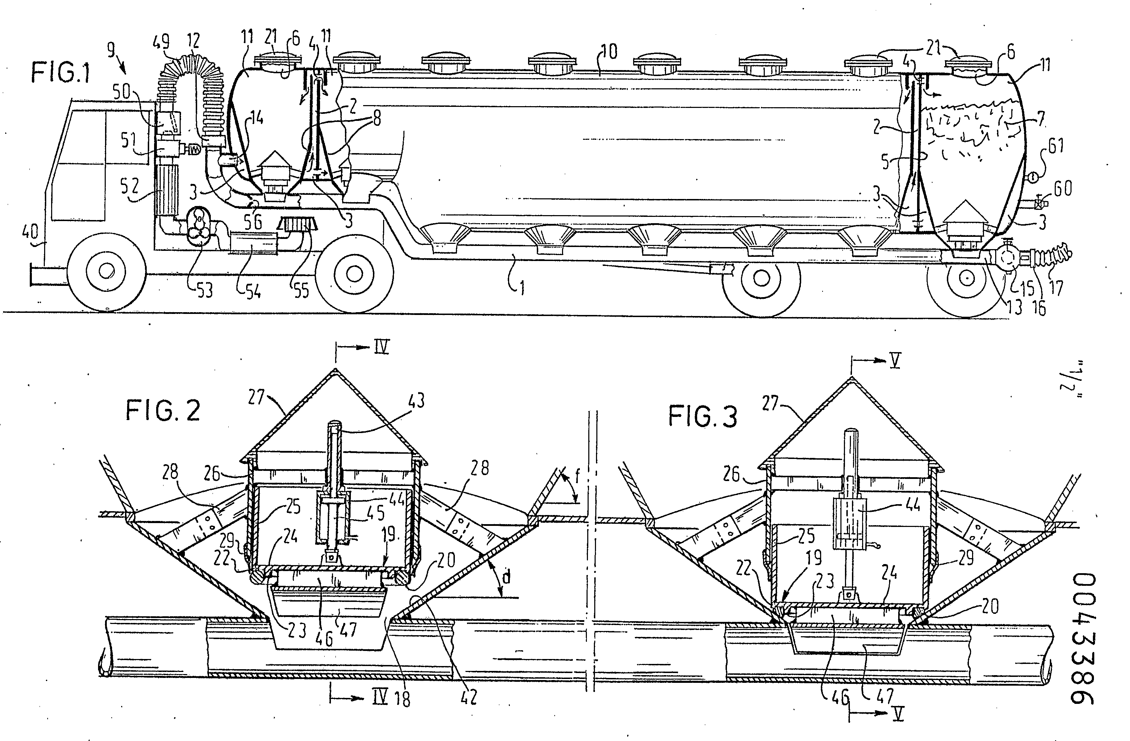

The vehicle 9 of fig.1 is a tractor 40 having a semi-trailer 41 carrying a tank 10. The vehicle 9 may, as an alternative, be constructed in the form of a self-propelled truck or of a rail wagon.

The tank 10 is divided into eight hoppers 11, each having on the bottom side a conical discharge funnel 8, the walls of which are at the lower ends at an angle $d$ of $36^{\circ}$ to the horizontal plane, whereas above the ends they have an angle of inclination $f$ of $60^{\circ}$ to the horizontal, so that the material 7 to be discharged automatically slides down along the wall of the discharge funnel 8. The filling ports 6 of the hoppers 11 are hermetically closed by means of covers 21. The hoppers 11 are separated from one another by transverse partitions 5 and communicate with one another through air passages 4 in the upper ends of the transverse partitions 5. The spaces 3 of the tank 10 below the discharge funnels 8 communicate with one another and with the top sides of the hoppers 11 through vertical air pipes 2 and the air passages 4.

Beneath the discharge funnels 8 a common discharge pipe 1 is arranged, the front end of which is formed by a connecting member 12 for compressed air and the rear end of which is formed by an outlet 13 for air and material. The discharge pipe 1 communicates through a conduit 14 with the spaces 3. The outlet 13 is connected through a closing member 15 with a coupling member 16 for a hose 17.

Each funnel 8 communicates through a discharge funnel opening 18 with the discharge pipe 1. The discharge funnel opening 18 can be closed by means of a round closing member 19, which establishes a sealing relationship to the conical inner wall 42 of the discharge funnel 8 by means of a toroidal rubber ring 20. The ring 20 is glued to a circular cavity formed by the outer edge 22 of a round plate 24 and a round ring 23 welded thereto. The outer edge 22 is welded to the lower end of the vertical sliding tube 25, which telescopically co-operates with a round metal screening hood 26, on which a conical top 27 of synthetic resin is placed. The screening hood 26 is fastened by two vertical strips 28 to the discharge funnel 8. To the lower end of the screening hood 26 an elastic sealing ring 29 is glued, which forms a seal on the outer side of the sliding tube 25. The screening hood 26 accommodates the control-means for the closing member 19. Said means preferably comprise a vertical cylinder 44 fastened to the screening hood 26, the piston rod 45 of which is coupled with the closing member 19. For opening the closing member 19 the cylinder 44 is energized by compressed air or a fluid and is urged down into the closed state by a spring, for example, an air spring 43. To the bottom side of the plate 24 a channel-section profile 46 is welded, to which is welded a filling piece 47 formed by a length of a cylinder and supplements the discharge pipe in the area of the discharge funnel opening 18. Thus when passing through the discharge funnel 8 the mixture of air and bulk material is not subjected to additional resistance, since the passage across it is uniform. The connecting member 12 communicates through a hose 49, a non-return valve 50, a safety valve 51 and a damper 52 with a roots blower 53, which draws in much air through a damper 54 and a filter 55 and supplies at a comparitively low pressure of 0.7 to 1 ato. 12 to 18 cubic metres a minute for discharging 20 to 30 tons of bulk material an hour, in dependence upon the kind of material and the height of elevation and the distance over which the material is conveyed through the hose 17 into a silo. The round discharge pipe 1 has an inner diameter of, for example, 10 cm and communicates with a connecting member 12 through a choke 56 having an inner passage diameter of 42 to 44 mm. The closing member 19 of the hopper 11 to be discharged, after the blower 53 is actuated and the spaces 3, the empty hoppers 11 and the top sides of the hoppers 11 still containing material are filled with compressed air whilst the closing member 15 is closed, is lifted to a height which depends upon the length of the hose 17, the height of elevation, the specific weight and the nature of the material to be discharged and so preferably in a manner such that the hose 17 will not likely be clogged.

In this way discharge can always be performed with full discharging capacity.

It is furthermore possible to discharge simultaneously two or three hoppers 11. Moreover, simultaneous transport of different kinds of fodder in the separate hoppers is possible

This vehicle is suitable for transporting not only powdered material, but also lumps of fodder.

During the discharge of a hopper 11 the well-sealing closing member 19 of an empty hopper 11 prevents leakage of air.

Therefore, all air supplied remains, without fail, available for capturing material 7 beneath the opened discharge funnel outlet 18, so that a constant, maximum discharging capacity is ensured. The design is such, that the

- 6 -                                    0043386

discharging funnel outlet 18 can again be closed, even if the hopper 11 concerned has been emptied only partly.

On the rear side of the vehicle 9 a vent cook 60 and a manometer 61 are provided, as well as the control means (not shown) of the mechanic, pneumatic or hydraulic driving means of the closing members 19 arranged beneath the heads 27.

- 1 -

C L A I M


A vehicle comprising a plurality of hoppers for conveying in bulk powdered, granular or fragmented material, said hoppers each having a filling opening that can be closed in an airtight manner and a discharge funnel, each discharge funnel communicating with a common discharge pipe through at least one discharge funnel opening that can be closed by a closing member adjustable in the direction of height, the discharge pipe having a compressed-air nozzle and an outlet for air with material, the hoppers communicating beyond the discharge funnel opening near their top ends with said nozzle and with one another, whilst the closing member has a circumference without corners and co-operates in sealing relation-

0043386

ship by means of an elastic sealing ring with a correspondingly shaped circumference of the discharge funnel, characterized in that beneath a cornerless sealing ring
co-operating in sealing relationship with the discharge
funnel, the closing member comprises a filling piece with
supplements, in the closed state of the closing member, the
wall of the common discharge pipe to form an uninterrupted
pipe of substantially uniform passage.

0043386

AMENDED
CLAIMS

- 1 -

CLAIM

A vehicle comprising a plurality of hoppers for conveying in bulk powdered, granular or fragmented material, said hoppers each having a filling opening that can be closed in an airtight manner and a discharge funnel, each discharge funnel communicating with a common discharge pipe through at least one discharge funnel opening that can be closed by a closing member adjustable in the direction of height, the discharge pipe having a compressed-air nozzle and an outlet for air with material, the hoppers communicating beyond the discharge funnel opening near their top ends with said nozzle and with one another, whilst the closing member has a circumference without corners and co-operates in sealing relationship by means of an elastic sealing ring with a correspondingly shaped circumference of the discharge funnel, characterized in that beneath a cornerless sealing ring co-operating in sealing relationship with the discharge funnel, the closing member comprises a filling piece which supplements, in the closed state of the closing member, the wall of the common discharge pipe to form an uninterrupted pipe of sub-

stantially uniform passage.

0043386

AMENDED
CLAIMS

FIG.1

FIG.2

FIG.3

0043386

27
26
28
28
29
20
46
47
42

FIG. 4

27
26
28
28
29
20
46
47
42

FIG. 5

11587-24.

| Category | Citation of document with indication, where appropriate, of relevant passages | Relevant to claim |
|---|---|---|
| | NL - A - 67 04 265 (GEBR. WELLINK) <br><br> * the whole document * | single |
| | GB - A - 923 935 (GENERAL AMERICAN TRANSPORTATION CO.) <br><br> * the whole document * | single |
| | NL - A - 76 13 523 (GEBR. WELLINK) <br> * the whole document * | single |
| | GB - A - 1 304 660 (GEBR. WELLINK) <br> * the whole document * | single |
| | NL - A - 75 14 607 (GOFA GOTTLER FAHRZEUGBAU) <br><br> * the whole document * | single |
| | DE - C - 374 033 (SIEGENER EISEN-BAHN-BEDARF A.G.) <br><br> * the whole document * | single |
| A | US - A - 3 189 388 (PULLMAN INC.) | single |
| A | US - A - 3 572 844 (PULLMAN INC.) | single |
| A | US - A - 3 152 842 (BUTLER Mfg CO.) | single |
| A | GB - A - 1 103 778 (CHEVRON CO.) | single |

**DOCUMENTS CONSIDERED TO BE RELEVANT**

**CLASSIFICATION OF THE APPLICATION (Int. Cl.3)**

B 60 P 1/60

**TECHNICAL FIELDS SEARCHED (Int. Cl.3)**

B 60 P 1/60
1/56
3/24
3/22
B 61 D 5/00
5/02

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 27-02-1981 | CORMACI |

EPO Form 1503.1 06.78